# FASCICULE DE BREVET EUROPEEN

(11) **EP 1 652 938 B1**
(45) Date de publication et mention de la délivrance du brevet: **15.12.2010**
(21) Numéro de dépôt: 05292253.1
(22) Date de dépôt: 25.10.2005
(51) Int. Cl.: C13K 1/10, C13K 1/08, C12N 5/00

(54) **Utilisation non alimentaire et non pharmaceutique d'une composition de dextrose anhydre sélectionnée**
Nicht im Bereich Lebensmittel oder Pharmazie liegende Verwendung auf Basis von gewählter wasserfreier Dextrosezusammensetzungen
Non- food and non- pharmaceutical use of a composition of selected anhydrous dextrose

(30) Priorité: 29.10.2004 FR 0411603
(43) Date de publication de la demande: 03.05.2006
(73) Titulaire: Roquette Frères, 62136 Lestrem (FR)
(72) Inventeur: Caboche, Jean-Jacques, 62131 Drouvin Le Marais (FR)
(74) Mandataire: Boulinguiez, Didier

(56) Documents cités:
- EP-A- 0 202 999
- EP-A- 1 013 777
- EP-A- 1 041 161
- EP-A- 1 188 764
- DE-A1- 2 144 406
- FR-A- 2 266 458
- FR-A- 2 366 361
- US-A- 4 059 460

## Description

La présente invention a pour objet l'utilisation non alimentaire et non pharmaceutique d'une composition de dextrose anhydre, sélectionnée notamment par ses caractéristiques de granulométrie et d'hygroscopicité.

Par « composition de dextrose anhydre », on entend ici toute composition solide de glucose a) dont la teneur en eau est au plus égale à 1 %, de préférence au plus égale à 0,9 %, exprimée par rapport au poids de ladite composition et b) dont la teneur en D-glucose est au moins égale à 96 %, de préférence au moins égale à 97 %, exprimée par rapport au poids sec de ladite composition.
• EP 1188764 A (CERESTAR HOLDING B.V.) divulgue l'utilisation non-alimentaire et non-pharmaceutique d'une composition pulvérulente de dextrose monohydrate déshydraté ayant une surface spécifique comprise entre 0,2 et 0,5 m²/g.
• US4059460 A (SCHOLLMEIER ET AL.) divulgue une poudre de dextrose anhydre ayant moins de 1% d'eau.
• EP 10411161 A (ROQUETTE FRERES) divulgue un procédé de préparation de dextrose α anhydre.
• EP 0202999 A (ROQUETTE FRERES) divulgue un procédé continu de préparation de dextrose anhydre cristallisé.

Cette composition peut présenter des taux de cristallinités variables. De préférence, plus de 90 % en poids (sec/sec) du glucose qu'elle contient se présentent sous forme anhydre cristalline. En outre, cette forme anhydre peut être représentée par des pourcentages très variables de, respectivement, formes alpha-anhydre et bêta-anhydre. De préférence, la forme alpha-anhydre représente plus de 85 % en poids (sec/sec) du dextrose anhydre.

Par « utilisation non alimentaire et non pharmaceutique », on entend ici toutes utilisations dans tous domaines d'application, à l'exception des cas particuliers où la composition de dextrose est destinée directement à être ingérée par l'homme ou l'animal ou destinée directement à être injectée à l'homme ou l'animal.

Cette définition inclut, à titre d'exemples non limitatifs conformes à l'invention, les utilisations de la composition de dextrose en vue de :
- la synthèse, par voie chimique, de dérivés du dextrose (ou glucose) tels que les alkyl(poly)glucosides, les alcényl(poly)glucosides, les mono- ou di-acétone glucoses, de caramels colorants, de polyols, d'acides, de vitamines, de tensio-actifs,
- la synthèse, par voie enzymatique ou microbiologique, des dérivés et produits précités,
- la préparation de milieux de fermentation, de croissance ou d'isolement de microorganismes uni- ou pluricellulaires (virus, bactéries, levures, champignons, algues...), de milieux de culture cellulaire ou tissulaire (cellules/tissus d'origine végétale ou animale),
- la préparation de compositions, en particulier nutritives, de déshydratation, de conditionnement, de conservation et/ou de protection, destinées au traitement des plantes ou parties de plantes (fleurs coupées, plantes en terre ou en pots, feuilles de tabac...),
- la préparation de compositions colorantes, d'adjuvants pour liants minéraux (ciments, coulis, bétons, plâtres...), d'additifs ou de compositions de traitement, interne ou externe, de matières plastiques, métalliques, papetières ou textiles, la préparation d'agglomérés, combustibles ou non, de moules et noyaux de fonderie, de plaques de plâtre, de colles et adhésifs, de compositions détergentes...

La Société Demanderesse a fait le constat qu'il n'existait pas à ce jour sur le marché, y compris en relation avec les domaines applicatifs précités, de composition de dextrose qui présente, simultanément, l'ensemble des critères ci-après :
1) une faible hygroscopicité, ne rendant pas indispensable un contrôle strict, et donc coûteux, de l'humidité ambiante des enceintes ou emballages devant contenir ladite composition,
2) des caractéristiques granulométriques et d'écoulement adaptées à des procédés et matériels industriels classiques de transport, d'ensachage, de dosage, de mélange, de stockage, de nettoyage et autres, ne rendant pas indispensable la mise en oeuvre de moyens additionnels et/ou coûteux (système d'alimentation pneumatique spécifique, trémie ou silo avec revêtement interne spécifique),
3) une densité également adaptée aux opérations industrielles précitées et notamment suffisamment élevée pour limiter i) le volume des enceintes et emballages devant contenir ladite composition, ii) la durée des opérations de chargement/déchargement de ladite composition et iii) les coûts industriels (réduction des coûts de transport, augmentation des cadences de production),
4) une teneur peu élevée en fines particules ou poussières limitant ainsi i) les risques d'explosion ou d'inhalation par les opérateurs, ii) les problèmes de contamination, par lesdites particules, de la surface des équipements, des emballages, iii) les problèmes de charges électrostatiques,
5) une pureté suffisante pour permettre à l'utilisateur d'atteindre ses propres objectifs industriels et commerciaux, notamment en termes i) de pureté de ses propres produits, chimiques ou biologiques, obtenus à partir du dextrose et ii) de rendement de ses propres procédés, chimiques ou biologiques, de traitement ou de transformation du dextrose,
6) une aptitude aussi faible que possible à se comprimer de manière intempestive dans les enceintes de stockage ou de transport, les emballages et ce, avant son emploi industriel.

Il a désormais été trouvé une composition de dextrose sélectionnée, apte à vérifier l'ensemble des critères 1) à 6) précités et applicables dès lors dans une multitude d'utilisations telles que listées précédemment.

De façon surprenante et inattendue, la composition de dextrose conçue et mise au point par la Demanderesse :
- non seulement évite les inconvénients industriels inhérents soit aux compositions à base de sirops de glucose atomisés (teneur en D-glucose limitée, forte hygroscopicité, poussières importantes, mauvais écoulement,...), soit aux compositions de dextrose monohydrate (teneur en eau très élevée et densité relativement faible d'où coûts de transport et d'utilisation élevés...),
- mais encore, du fait de ses caractéristiques améliorées, tout particulièrement en termes de granulométrie, d'hygroscopicité réduite et de densité, permet notamment d'être avantageusement utilisable dans des domaines industriels jusqu'alors réservés aux seules compositions de dextrose monohydrate, ou techniquement inaccessibles à toutes compositions solides de glucose.

La présente invention a plus précisément pour objet l'utilisation non alimentaire et non pharmaceutique, d'une composition de dextrose anhydre pulvérulente, caractérisée en ce que ladite composition présente :
a) une granulométrie telle que :
   - au plus 4 % de ses particules (exprimé en volume) ont une taille au plus égale à 40 microns, et
   - au plus 8 % de ses particules (exprimé en volume) ont une taille au plus égale à 100 microns,
b) un indice d'hygroscopicité inférieur à 1 %, et
c) une densité apparente supérieure à 0,7 kg/l.

La granulométrie de la composition de dextrose est mesurée classiquement par granulométrie laser en phase sèche, par exemple sur un granulomètre LASER LS 230 de marque COULTER® équipé d'un module phase sèche type « DRY POWDER ».

L'indice d'hygroscopicité, exprimé en %, correspond à la différence des valeurs de teneur en eau de la composition de dextrose, mesurées à l'équilibre, sur un même échantillon lorsque celui-ci est placé d'une part à une température de 20°C et à une humidité relative (HR) de 75 % et d'autre part à 20°C et à une HR de 50 %, étant entendu que ledit échantillon est placé, à 20°C, d'abord à 50 % de H.R puis à 75 % de H.R.

Dans le cadre de la présente demande, la densité apparente correspond à la masse volumique sans tassement de la composition de dextrose, exprimée en kg/l, et est mesurée par toute méthode classique.

Selon une première variante, la composition de dextrose utilisable selon l'invention présente une granulométrie telle qu'au plus 3 %, de préférence au plus 2 %, de ses particules ont une taille au plus égale à 40 microns. Avantageusement, cette valeur peut être inférieure à 1,5 % et notamment comprise entre 0 et 1 %.

Selon une autre variante, combinée ou non à la précédente, ladite composition présente une granulométrie telle qu'au plus 7 %, de préférence au plus 6 %, de ses particules ont une taille au plus égale à 100 microns. Cette valeur peut être inférieure à 5 %, y compris se situer entre 0 et 3 %.

Selon un mode particulièrement avantageux de l'invention, ladite composition présente une granulométrie telle que :
- au plus 1 % de ses particules ont une taille au plus égale à 40 microns, et
- au plus 2 % de ses particules ont une taille au plus égale à 100 microns.

Par ailleurs, le diamètre moyen (en l'occurrence le D (4,3)) des particules constitutives de ladite composition de dextrose peut notamment être supérieur à 250 microns et inférieur à 650 microns, en particulier être compris entre 280 et 540 microns. Il peut, à titre d'exemple, se situer entre 300 et 500 microns, notamment entre 350 et 500 microns.

Selon d'autres variantes, combinées ou non entre elles ou avec les variantes précédemment décrites, ladite composition de dextrose utilisable conformément à l'invention présente :
- un indice d'hygroscopicité inférieur à 0,5 %, de préférence inférieur à 0,15 %, et/ou
- une densité apparente supérieure à 0,75 kg/l, de préférence comprise entre 0,78 et 0,95 kg/l.

De manière remarquable, l'indice d'hygroscopicité, peut être significativement inférieur à 0,15 %, notamment inférieur à 0,1 % et par exemple compris entre 0,01 et 0,09 %.

Indépendamment, la Société Demanderesse a par ailleurs observé que la composition de dextrose anhydre utilisable selon l'invention pouvait, à une HR très élevée, à savoir de 85 %, contenir moins de 1 % d'eau, voire moins de 0,5 % d'eau, à l'équilibre.

La densité apparente de ladite composition peut avantageusement être comprise entre 0,80 et 0,92 kg/l.

Pour certaines utilisations, il est souhaitable par ailleurs de mettre à la disposition de l'utilisateur une composition de dextrose anhydre telle que définie précédemment mais présentant une teneur en D-glucose encore plus élevée que 96 ou 97 % et/ou une teneur en eau encore plus basse que 1 ou 0,9 %.

En suite de quoi, pour l'ensemble des variantes précitées, on peut avantageusement prévoir que la composition de dextrose présente :
- une teneur en D-glucose au moins égale à 98 %, de préférence comprise entre 99 et 100 % (sec/sec), et/ou
- une teneur en eau inférieure à 0,8 %, de préférence inférieure à 0,5 % et plus préférentiellement encore comprise entre 0,01 et 0,45 %.

La teneur en D-glucose peut, à titre d'exemple, être comprise entre 99,5 % et 100 %. Elle peut notamment être supérieure à 99,7 % (sec/sec). Le glucose peut majoritairement, voire quasi exclusivement, être présent sous forme anhydre cristalline, elle-même pouvant majoritairement, voire quasi-exclusivement, être une forme alpha-anhydre.

La teneur en eau peut, à titre d'exemple, être comprise entre 0,05 et 0,4 %. Elle peut notamment être inférieure à 0,2 %.

Compte-tenu des caractéristiques de la composition de dextrose anhydre utilisable selon l'invention, ladite composition se présente généralement comme une poudre qualifiable de « poudre à écoulement libre ».

De manière remarquable, selon un test qui sera décrit par ailleurs (« test T »), ladite composition peut présenter des caractéristiques d'écoulement améliorées en regard de celles des compositions de dextrose généralement mises sur le marché, notamment dans les domaines applicatifs ici visés.

En particulier, ladite composition peut avantageusement présenter, selon ledit test T, un indice d'écoulement tel qu'il sera défini par ailleurs, inférieur à 25 secondes, de préférence compris entre 8 et 24 secondes et notamment compris entre 9 et 22 secondes. Cette valeur d'indice peut notamment être comprise entre 10 et 18 secondes.

En outre, en relation plus particulièrement avec le critère 6) précité, la composition de dextrose anhydre utilisable conformément à l'invention présente une très faible compressibilité, voire une absence de compressibilité.

En regard du brevet EP 1 013 777 au nom de la Demanderesse, ladite composition peut notamment présenter une compressibilité, déterminée selon le test A tel que décrit au paragraphe 28, page 3, lignes 30-35 du brevet EP 1 013 777, inférieure à 80 Newtons, de préférence inférieure à 50 Newtons et plus préférentiellement encore inférieure à 30 Newtons.

Ce test A consiste à mesurer la force, exprimée en Newtons, qui est représentative de la compressibilité du dextrose pulvérulent étudié. Cette force traduit ici la résistance à l'écrasement d'un comprimé qui est cylindrique à faces convexes (rayon de courbure de 14 mm), d'un diamètre de 13 mm, d'une épaisseur de 6 mm et d'un poids de 0,764 g, soit d'une masse volumique apparente de 1,3 kg/l.

Selon une variante particulièrement avantageuse, la composition de dextrose anhydre présente simultanément :
a) une granulométrie telle que :
   - au plus 4 % de ses particules (exprimé en volume) ont une taille au plus égale à 40 microns, et
   - au plus 8 % de ses particules (exprimé en volume) ont une taille au plus égale à 100 microns,
b) un indice d'hygroscopicité inférieur à 1 %,
c) une densité apparente supérieure à 0,7 kg/l mais aussi,
d) une teneur en D-glucose supérieure à 99,7 % (sec/sec), et
e) une teneur en eau inférieure à 0,5 %, de préférence inférieure à 0,2 %.

A la connaissance de la Demanderesse, une composition de dextrose ainsi caractérisée est nouvelle, indépendamment des applications (alimentaires ou non, pharmaceutiques ou non) auxquelles on pourrait la destiner.

De préférence, un tel produit industriel nouveau présente en outre :
- un diamètre moyen compris entre 280 et 540 microns, et
- une compressibilité, déterminée selon ledit test A, inférieure à 30 Newtons.

La composition de dextrose anhydre selon l'invention ou utilisable selon l'invention peut être obtenue par tout moyen ou toute combinaison de moyens apte à lui conférer les caractéristiques sélectionnées précitées a) à c) respectivement de granulométrie, d'indice d'hygroscopicité et de densité apparente ainsi que, éventuellement, les caractéristiques optionnelles de teneur en D-glucose, de teneur en eau, de diamètre moyen et/ou de compressibilité, également précitées.

Elle peut notamment être préparée à partir d'un sirop à très haute teneur en glucose (96 % exprimé en sec/sec) tel qu'obtenu initialement selon les principes généraux décrits dans l'un ou l'autre des brevets FR 2 762 616, FR 2 791 700, FR 2 791 701, FR 2 791 703 ou FR 2 830 021 au nom de la Demanderesse, en particulier d'un sirop tel qu'obtenu initialement par mise en oeuvre de moyens membranaires, en particulier de membranes de nanofiltration, ou de moyens chromatographiques.

Ledit sirop, obtenu ou non selon l'un des brevets précités, peut ensuite avantageusement être concentré puis cristallisé par évaporation comme décrit, par exemple, dans le brevet FR 2 791 703 susmentionné.

La masse de cristaux résultante peut, à titre d'exemple, être ensuite séchée sur tambour rotatif et/ou lit fluidisé de telle sorte que sa teneur en eau soit au plus égale à 1 %, par exemple de l'ordre de 0,05 à 0,40 %, notamment en vue d'obtenir une composition exempte ou quasi-exempte de dextrose monohydrate et présentant un indice d'hygroscopicité tel que sélectionné.

Les cristaux ainsi séchés peuvent alors subir au moins une étape de séparation physique, par exemple au moins une étape de séparation sur un ou plusieurs tamis industriels dont l'ouverture de maille devra, pour chacun, être soigneusement sélectionnée de telle sorte que l'on puisse récupérer une poudre présentant les caractéristiques, non seulement de granulométrie mais encore de densité, conformes à l'invention.

En suite de quoi, on dispose désormais d'un nouveau moyen industriel apte à être avantageusement utilisé dans les nombreux domaines applicatifs précités.

A titre d'exemple, la composition de dextrose anhydre sélectionnée conformément à l'invention trouve une application industrielle immédiate dans la préparation de compositions, notamment nutritives, de déshydratation, de conditionnement, de conservation et/ou de protection, destinées au traitement des plantes ou parties des plantes, par exemple des fleurs coupées.

Il est largement connu, dans ce domaine, l'utilisation de glucose ou dextrose comme décrit par exemple dans les brevets FR 2 266 458, FR 2 446 068, GB 2 189 676, US 6,083,535 ou WO 01/50853.

Dans ce genre de compositions, le glucose ou dextrose est classiquement associé, entre autres, à au moins un acide organique tel que l'acide citrique ou l'acide succinique et à au moins un agent biocide.

Des travaux scientifiques récents ont étudié plus avant le rôle des sucres (éventuellement hydrogénés) dont le glucose dans divers processus métaboliques ou physiologiques pouvant atteindre les fleurs coupées (absorption d'eau, production d'éthylène, sénescence...). Il s'agit notamment des articles suivants :
- « Evaluation of Different Types of Sugars for Improving Postharvest Life and Quality of Cut Roses » de S. K. BHATTACHARJEE, Ann. Agric. Res. 20 (2) : 159-165 (1999), et
- « Role of Sugars in Senescence and Biosynthesis of Ethylene in Cut Flowers" de U.K. PUN et K. ICHIMURA, JARQ 37(4),219-224 (2003).

Parmi les documents précités, seul l'article de S. K. BHATTACHARJEE envisage nommément l'usage de dextrose anhydre, les autres documents parlant de glucose ou de dextrose en toute généralité ou citant nommément le dextrose monohydrate (FR 2 266 458).

A la connaissance de la Demanderesse, seul à ce jour le dextrose monohydrate est utilisé industriellement et commercialement dans ce secteur d'activité.

En tout état de cause, aucun de ces documents ne s'intéresse à la mise au point d'une composition de dextrose pour fleurs coupées qui vérifierait l'ensemble des critères 1) à 6) précités (aspects hygroscopicité, granulométrie/écoulement, densité, teneurs en fines particules, pureté, compressibilité).

Et la Société Demanderesse a trouvé que dans cette application particulière comme dans d'autres, notamment celles employant classiquement du dextrose monohydrate, la composition de dextrose anhydre sélectionnée conformément à l'invention permettait non seulement de vérifier les critères 1) à 6) précités mais encore d'être facilement utilisable, en mélange, avec des additifs très divers, y compris en présence d'eau, et de fournir des compositions formulées présentant elles-mêmes des caractéristiques souhaitées ou améliorées en termes d'hygroscopicité, de granulométrie, d'écoulement, de densité mais aussi de compressibilité, de coloration et/ou d'activité biologique.

L'invention pourra être encore mieux comprise à l'aide des exemples qui suivent et qui ne sont donnés qu'à titre purement illustratif.

### EXEMPLE 1

On prépare une composition de dextrose anhydre conforme à l'invention à partir d'une masse de cristaux de dextrose présentant une richesse en D-glucose supérieure à 99,5 % (sec/sec) et une teneur en eau d'environ 3 %, ladite masse de cristaux ayant été obtenue après des étapes classiques, menées en continu, d'évapo-cristallisation, d'essorage (séparation des cristaux et des eaux-mères), de lavage des cristaux puis d'essorage final des cristaux lavés.

Ces cristaux sont ensuite séchés sur tambour rotatif avec de l'air chaud, de façon à présenter une teneur en eau inférieure à 0,2 %, puis refroidis à température ambiante sur lit fluidisé.

Ils sont ensuite passés sur un tamis de 1000 µm, la masse de cristaux non retenue sur ledit tamis étant ensuite à nouveau tamisée mais sur 250 µm.

La composition de dextrose anhydre conforme à l'invention représente la masse de cristaux de dextrose retenue sur ce second tamis.

Elle se présente sous la forme d'une poudre blanche s'écoulant librement et présentant les caractéristiques ci-après, mesurées comme décrit précédemment :
- Teneur en D-glucose (« D-GLU ») : 100 %
- Volume de particules dont la taille est au plus égale à 40 µm (« V 40 µ ») : 0 %
- Volume de particules dont la taille est au plus égale à 100 µm (« V 100 µ ») : 0,2 %
- Diamètre moyen (« D (4,3) ») : 477 µm
- Teneur en eau (« H₂O ») : 0,15 %
- Teneur en eau, à l'équilibre, à 20°C et 50 % HR (« EQU1 ») : 0,20 %
- Teneur en eau, à l'équilibre, à 20°C et 75 % HR (« EQU2 ») : 0,23 %
- Indice d'hygroscopicité (« HYGRO ») = EQU2 - EQU1 : 0,03 %
- DENSITE APPARENTE (« DENSIT. ») = 0,87 kg/l.

On a étudié les caractéristiques d'écoulement de ladite composition (ci-après « COMPOSITION A ») selon le test T décrit ci-après et basé sur la mesure du temps d'écoulement d'une quantité déterminée de composition pulvérulente dans un entonnoir normalisé.

Dans un bêcher en plastique de 2 litres, on pèse 1 kg de composition pulvérulente à tester que l'on introduit lentement dans un entonnoir métallique normalisé, fourni par la Société CONTROLAB sous la référence « L 0060.1 ».

Cet entonnoir présente une partie conique dont la hauteur est de 240 mm et le diamètre intérieur de 200 mm, ladite partie conique étant prolongée par une partie rectiligne dont la hauteur est de 100 mm et le diamètre intérieur de 20 mm.

L'extrémité terminale de ladite partie rectiligne est équipée d'une vanne, en l'occurrence en position fermée, obstruant ainsi cette extrémité terminale et empêchant par là-même l'écoulement de la poudre.

Après introduction de la COMPOSITION A dans l'entonnoir ainsi obstrué dans son extrémité terminale, on laisse le système au repos pendant 5 minutes. En suite de quoi, on ouvre la vanne précitée et, simultanément, on déclenche un chronomètre.

On arrête le chronomètre quand l'intégralité de la poudre a fini de s'écouler de l'entonnoir. On note le temps nécessaire à cet écoulement. L'indice d'écoulement (« FLOW T ») selon le test T qui vient d'être décrit, exprimé en secondes, correspond à la moyenne de 3 valeurs mesurées pour la même composition testée.

La COMPOSITION A conforme à l'invention présente ainsi un indice d'écoulement FLOW T de 14,32 secondes, étant par ailleurs précisé que ladite COMPOSITION A :
- présente un écoulement parfaitement libre, aucune aide n'ayant été nécessaire, à quelque moment que ce soit du test T, pour permettre ou faciliter l'écoulement de ladite COMPOSITION A, et
- ne génère pas de poussières lors du test T.

La Demanderesse a par ailleurs évalué les performances d'écoulement de la même COMPOSITION A mais selon un autre test (« test T' »), similaire au test T si ce n'est que la masse de 1 kg de COMPOSITION A introduite dans l'entonnoir normalisé est substituée par la même masse d'une composition formulée consistant en un mélange pulvérulent à base de :
- 947,5 g de COMPOSITION A,
- 49,5 g de glucono-delta-lactone (« GDL ») cristallisée commercialisée par la demanderesse sous la marque LYSACTONE®, et
- 1,5 g de dichloroisocyanurate de sodium (« DCINa ») pulvérulent préalablement dispersé dans 1,5 g d'eau.

Un tel mélange à base de dextrose, d'agent acidifiant (GDL) et d'agent biocide (DCINa) est notamment utilisable dans le domaine des compositions destinées au traitement des (parties de) plantes, en particulier des fleurs coupées.

Selon le test T' tel que décrit précédemment, le mélange pulvérulent à base, très majoritairement, de COMPOSITION A, a donné une valeur d'indice d'écoulement (« FLOW T' ») de 14,56 secondes (moyenne de 3 valeurs), c'est-à-dire équivalente à la valeur d'indice FLOW T obtenue pour la COMPOSITION évaluée seule selon le test T (14,32 secondes).

Et ceci, comme dans le cas du test T, sans besoin d'aide à l'écoulement et sans génération de poussières.

La COMPOSITION A, de par ses caractéristiques physiques, peut donc avantageusement être utilisée pour la préparation de compositions pulvérulentes formulées s'écoulant librement.

Elle présente par ailleurs, comme l'a constaté la Demanderesse, une très faible compressibilité (< 30 Newtons selon test A précité) et peut donc, seule ou au sein d'un mélange pulvérulent la contenant, être stockée, transportée ou conditionnée sans risque majeur de formation d'agglomérats indésirables.

### EXEMPLE 2

On a mesuré, dans les mêmes conditions que celles de l'EXEMPLE 1, les caractéristiques de, respectivement :
- deux autres compositions de dextrose anhydre conformes à l'invention (ci-après « COMPOSITION B » et « COMPOSITION C »),
- une composition de glucose non conforme à l'invention, représentative d'un dextrose anhydre du marché (« COMPOSITION T1 »),
- une composition de glucose non conforme à l'invention, représentative d'un dextrose monohydrate du marché (« COMPOSITION T2 »), et
- une composition de glucose non conforme à l'invention, représentative d'un sirop de glucose atomisé du marché (« COMPOSITION T3 »).

Le tableau ci-dessous reprend les caractéristiques de chacune des COMPOSITIONS A, B et C selon l'invention et des COMPOSITIONS T1, T2 et T3 hors invention.

| COMPOSITION | A | B | C | T1 | T2 | T3 |
|---|---|---|---|---|---|---|
| D-GLU (%) | 100 | 99,9 | 100 | 99,5 | 99,0 | 94,7 |
| V 40 µ (%) | 0 | 0 | 1,2 | 3,0 | 0,2 | 2 |
| V 100 µ (%) | 0,2 | 0 | 6 | 16 | 1,2 | 4 |
| D (4,3) (µm) | 477 | 375 | 409 | 270 | 250 | 550 |
| H₂0 (%) | 0,15 | 0,28 | 0,07 | 0,13 | 8,9 | 0,93 |
| EQU 1 (%) | 0,20 | 0,28 | 0,10 | 0,18 | 9,60 | 0,93 |
| EQU 2 (%) | 0,23 | 0,32 | 0,13 | 0,28 | 9,77 | 8,89 |
| HYGRO (%) | 0,03 | 0,04 | 0,03 | 0,10 | 0,17 | 7,96 |
| DENS. (kg/l) | 0,87 | 0,80 | 0,87 | 0,77 | 0,53 | 0,72 |
| FLOW T (s) | 14,32 | 15,68 | 20,51 | 20,02 | 27,36 | 19,03 |
| FLOW T' (s) | 14,56 | 17,08 | 13,50 | 20,45 (*) | 32,43 (**) | 18,50 (*) |

| | | | | | | |
|---|---|---|---|---|---|---|
| (*) absence d'écoulement libre - aide à l'écoulement | | | | | | |
| (**)génération de poussières | | | | | | |

Les résultats ci-dessus montrent que les compositions de dextrose anhydre conformes à l'invention telles que les COMPOSITIONS A, B et C présentent de remarquables caractéristiques en terme de granulométrie, d'hygroscopicité, de densité et d'écoulement et sont, de ce fait, avantageusement utilisables, seules ou en mélange, en tant que poudres à écoulement libre dans des applications aussi variées que celles de la synthèse, par voie chimique ou biotechnologique, de substances, d'additifs ou de principes actifs, de la production de matériaux tels que plaques de plâtres, liants minéraux ou encore du traitement de plantes.

## Revendications

1. Utilisation non alimentaire et non pharmaceutique d'une composition de dextrose anhydre pulvérulente, **caractérisée par le fait que** ladite composition présente :
a) une granulométrie telle que :
- au plus 4 % de ses particules (exprimé en volume) ont une taille au plus égale à 40 microns, et
- au plus 8 % de ses particules (exprimé en volume) ont une taille au plus égale à 100 microns,
b) un indice d'hygroscopicité inférieur à 1 %, et
c) une densité apparente supérieure à 0,7 kg/l.

2. Utilisation selon la revendication 1, **caractérisée par le fait que** ladite composition de dextrose présente une granulométrie telle qu'au plus 3 %, de préférence au plus 2 %, de ses particules ont une taille au plus égale à 40 microns.

3. Utilisation selon l'une des revendications 1 ou 2, **caractérisée par le fait que** ladite composition de dextrose présente une granulométrie telle qu'au plus 7 %, de préférence au plus 6 %, de ses particules ont une taille au plus égale à 100 microns.

4. Utilisation selon la revendication 3, **caractérisée par le fait que** ladite composition de dextrose présente une granulométrie telle que :
- au plus 1 % de ses particules ont une taille au plus égale à 40 microns, et
- au plus 2 % de ses particules ont une taille au plus égale à 100 microns.

5. Utilisation selon l'une des revendications 1 à 4, **caractérisée par le fait que** le diamètre moyen des particules de ladite composition de dextrose est supérieur à 250 microns et inférieur à 650 microns, en particulier compris entre 280 et 540 microns.

6. Utilisation selon l'une des revendications 1 à 5, **caractérisée par le fait que** ladite composition de dextrose présente :
- un indice d'hygroscopicité inférieur à 0,5 %, de préférence inférieur à 0,15 %, et/ou
- une densité apparente supérieure à 0,75 kg/l, de préférence comprise entre 0,78 et 0,95 kg/l.

7. Utilisation selon l'une des revendications 1 à 6, **caractérisée par le fait que** ladite composition de dextrose présente :
- une teneur en D-glucose au moins égale à 98 %, de préférence comprise entre 99 et 100 %, exprimée par rapport au poids sec de ladite composition, et/ou
- une teneur en eau inférieure à 0,8 %-, de préférence inférieure à 0,5 % et plus préférentiellement encore comprise entre 0,01 et 0,4 %, exprimée par rapport au poids de ladite composition.

8. Utilisation selon l'une des revendications 1 à 7, **caractérisée par le fait que** ladite composition de dextrose présente un indice d'écoulement, mesuré selon un test T, inférieur à 25 secondes, de préférence compris entre 8 et 24 secondes et plus préférentiellement encore compris entre 9 et 22 secondes.

9. Utilisation selon l'une des revendications 1 à 8, **caractérisée par le fait que** ladite composition de dextrose présente une compressibilité, mesurée selon un test A, inférieure à 80 Newtons, de préférence inférieure à 50 Newtons et plus préférentiellement encore inférieure à 30 Newtons.

10. Composition de dextrose anhydre pulvérulente présentant :
a) une granulométrie telle que :
- au plus 4 % de ses particules (exprimé en volume) ont une taille au plus égale à 40 microns, et
- au plus 8 % de ses particules (exprimé en volume) ont une taille au plus égale à 100 microns b) un indice d'hygroscopicité inférieur à 1 %,
c) une densité apparente supérieure à 0,7 kg/l,
d) une teneur en D-glucose supérieure à 99,7 %, exprimée par rapport au poids sec de ladite composition, et
e) une teneur en eau inférieure à 0,5 %, de préférence inférieure à 0,2 %, exprimée par rapport au poids de ladite composition.

11. Composition selon la revendication 10, **caractérisée par le fait qu'**elle présente :
- un diamètre moyen de ses particules, compris entre 280 et 540 microns, et
- une compressibilité, mesurée selon un test A, inférieure à 30 Newtons.

12. Utilisation selon l'une des revendications 1 à 9 ou d'une composition selon l'une des revendications 10 ou 11 en vue de :
- la synthèse, par voie chimique, enzymatique ou microbiologique, de dérivés de dextrose ou glucose, en particulier d'alkyl(poly)glucosides, d'alcényl (poly) - glucosides, de mono- ou diacétone glucoses, de caramels colorants, de polyols, d'acides, de vitamines ou de tensio-actifs,
- la préparation de milieux de fermentation, de croissance ou d'isolement de microorganismes uni- ou pluricellulaires, de milieux de culture cellulaire ou tissulaire,
- la préparation de compositions, en particulier nutritives, de déshydratation, de conditionnement, de conservation et/ou de protection, destinées au traitement des plantes ou parties de plantes et/ou,
- la préparation de compositions colorantes, d'adjuvants pour liants minéraux, d'additifs ou de compositions de traitement, interne ou externe, de matières plastiques, métalliques, papetières ou textiles, la préparation d'agglomérés, combustibles ou non, de moules et noyaux de fonderie, de plaques de plâtre, de colles et adhésifs et de compositions détergentes.

13. Utilisation selon la revendication 12 en vue de la préparation d'une composition destinée au traitement des fleurs coupées.

## Claims

1. A non-food and non-pharmaceutical use of a powder anhydrous dextrose composition, **characterized by** the fact that said composition has:
a) a particle size distribution such that:
- at most 4% of its particles (expressed as a volume) have a size at least equal to 40 microns, and
- at most 8% of its particles (expressed as a volume) have a size at most equal to 100 microns,
b) a hygroscopic index less than 1%, and
c) an apparent density larger than 0.7 kg/l.

2. The use according to claim 1, **characterized by** the fact that said dextrose composition has a particle size distribution such that at most 3%, preferably at most 2%, of its particles have a size at most equal to 40 microns.

3. The use according to any of claims 1 or 2, **characterized by** the fact that said dextrose composition has a particle size distribution such that at most 7%, preferably at most 6%, of its particles have a size at most equal to 100 microns.

4. The use according to claim 3, **characterized by** the fact that said dextrose composition has a particle size distribution such that:
- at most 1% of its particles have a size at most equal to 40 microns, and
- at most 2% of its particles have a size at most equal to 100 microns.

5. The use according to any of claims 1 to 4, **characterized by** the fact that the average diameter of the particles of said dextrose composition is larger than 250 microns and less than 650 microns, in particular between 280 and 540 microns.

6. The use according to any of claims 1 to 5, **characterized by** the fact that said dextrose composition has:
- a hygroscopic index less than 0.5%, preferably less than 0.15%, and/or
- an apparent density larger than 0.75 kg/I, preferably of between 0.78 and 0.95 kg/l.

7. The use according to any of claims 1 to 6, **characterized by** the fact that said dextrose composition has:
- a D-glucose content at least equal to 98%, preferably between 99 and 100%, expressed relatively to the dry weight of said composition, and/or
- a water content less than 0.8%, preferably less than 0.5% and even more preferably between 0.01 and 0.4%, expressed relatively to the weight of said composition.

8. The use according to any of claims 1 to 7, **characterized by** the fact that said dextrose composition has a flow index, measured according to a test T, of less than 25 seconds, preferably between 8 and 24 seconds, and even more preferably between 9 and 22 seconds.

9. The use according to any of claims 1 to 8, **characterized by** the fact that said dextrose composition has a compressibility, measured according to a test A, of less than 80 Newtons, preferably less than 50 Newtons, and even more preferably less than 30 Newtons.

10. A powder anhydrous dextrose composition having:
a) a particle size distribution such that:
- at most 4% of its particles (expressed as a volume) have a size at most equal to 40 microns, and
- at most 8% of its particles (expressed as a volume) have a size at most equal to 100 microns,
b) a hygroscopic index less than 1%,
c) an apparent density larger than 0.7 kg/l,
d) a D-glucose content larger than 99.7%, expressed relatively to the dry weight of said composition, and
e) a water content less than 0.5%, preferably less than 0.2%, expressed relatively to the weight of said composition.

11. The composition according to claim 10, **characterized by** the fact that it has:
- an average diameter of its particles of between 280 and 540 microns, and
- a compressibility, measured according to a test A, of less than 30 Newtons.

12. The use according to any of claims 1 to 9, or of a composition according to any of claims 10 or 11, for:
- synthesizing via a chemical, enzymatic or microbiological route, derivatives of dextrose or glucose, in particular alkyl polyglucosides, alkenyl polyglucosides, monoacetone or diacetone glucoses, coloring caramels, polyols, acids, vitamins, or surfactants,
- preparing media for fermenting, growing or isolating unicellular or multicellular microorganisms, media for cell or tissue culture,
- preparing compositions, in particular nutritive, dehydrating, conditioning, preservative and/or protective compositions, intended for treating plants or portions of plants, and/or
- preparing coloring compositions, adjuvants for mineral binders, additives or compositions for internally or externally treating plastic, metal, paper or textile materials, preparing agglomerates, either combustible or not, of casting molds and cores, of plaster boards, glues and adhesives, and detergent compositions.

13. The use according to claim 12, for preparing a composition intended for treating cut flowers.

## Patentansprüche

1. Nicht im Lebensmittelbereich und nicht im pharmazeutischen Bereich liegende Verwendung einer wasserfreien pulverförmigen Dextrosezusammensetzung, **dadurch gekennzeichnet, dass** die Zusammensetzung aufweist:
a) so eine Partikelgröße, dass:
- höchstens 4% ihrer Partikel (ausgedrückt als Volumen) eine Größe von höchstens gleich 40 Mikrometern aufweisen und
- höchstens 8% ihrer Partikel (ausgedrückt als Volumen) eine Größe von höchstens gleich 100 Mikrometern aufweisen,
b) einen Hygroskopizitätsindex von kleiner als 1 % und
c) eine Schüttdichte von größer als 0,7 kg/l.

2. Verwendung gemäß Anspruch 1, **dadurch gekennzeichnet, dass** die Dextrosezusammensetzung so eine Partikelgröße aufweist, dass höchstens 3%, bevorzugt höchstens 2%, ihrer Partikel eine Größe von höchstens gleich 40 Mikrometern aufweisen.

3. Verwendung gemäß einem der Ansprüche 1 oder 2, **dadurch gekennzeichnet, dass** die Dextrosezusammensetzung so eine Partikelgröße aufweist, dass höchstens 7%, bevorzugt höchstens 6%, ihrer Partikel eine Größe von höchstens gleich 100 Mikrometern aufweisen.

4. Verwendung gemäß Anspruch 3, **dadurch gekennzeichnet, dass** die Dextrosezusammensetzung so eine Partikelgröße aufweist, dass:
- höchstens 1 % ihrer Partikel eine Größe von höchstens gleich 40 Mikrometern aufweisen und
- höchstens 2% ihrer Partikel eine Größe von höchstens gleich 100 Mikrometern aufweisen.

5. Verwendung gemäß einem der Ansprüche 1 bis 4, **dadurch gekennzeichnet, dass** der mittlere Durchmesser der Partikel der Dextrosezusammensetzung größer als 250 Mikrometer und kleiner als 650 Mikrometer ist, insbesondere zwischen 280 und 540 Mikrometern liegt.

6. Verwendung gemäß einem der Ansprüche 1 bis 5, **dadurch gekennzeichnet, dass** die Dextrosezusammensetzung aufweist:
- einen Hygroskopizitätsindex von kleiner als 0,5%, bevorzugt von kleiner als 0,15% und/oder
- eine Schüttdichte von größer als 0,75 kg/l, bevorzugt zwischen 0,78 und 0,95 kg/l.

7. Verwendung gemäß einem der Ansprüche 1 bis 6, **dadurch gekennzeichnet, dass** die Dextrosezusammensetzung aufweist:
- einen Gehalt an D-Glucose von mindestens gleich 98%, bevorzugt zwischen 99 und 100%, ausgedrückt bezogen auf das Trockengewicht der Zusammensetzung und/oder
- einen Gehalt an Wasser von kleiner als 0,8%, bevorzugt von kleiner als 0,5% und noch stärker bevorzugt zwischen 0,01 und 0,4%, ausgedrückt bezogen auf das Gewicht der Zusammensetzung.

8. Verwendung gemäß einem der Ansprüche 1 bis 7, **dadurch gekennzeichnet, dass** die Dextrosezusammensetzung einen Fließindex, gemessen gemäß einem Test T, von kleiner als 25 Sekunden, bevorzugt zwischen 8 und 24 Sekunden, und noch stärker bevorzugt zwischen 9 und 22 Sekunden, aufweist.

9. Verwendung gemäß einem der Ansprüche 1 bis 8, **dadurch gekennzeichnet, dass** die Dextrosezusammensetzung eine Kompressibilität, gemessen gemäß einem Test A, von kleiner als 80 Newton, bevorzugt von kleiner als 50 Newton und noch stärker bevorzugt von kleiner als 30 Newton aufweist.

10. Pulverförmige wasserfreie Dextrosezusammensetzungen, die aufweist:
a) so eine Partikelgröße, dass:
- höchstens 4% ihrer Partikel (ausgedrückt als Volumen) eine Größe von höchstens gleich 40 Mikrometern aufweisen und
- höchstens 8% ihrer Partikel (ausgedrückt als Volumen) eine Größe von höchstens gleich 100 Mikrometern aufweisen, b) einen Hygroskopizitätsindex von kleiner als 1%,
c) eine Schüttdichte von größer als 0,7 kg/l,
d) einen Gehalt an D-Glucose von größer als 99,7%, ausgedrückt bezogen auf das Trockengewicht der Zusammensetzung und
e) einen Gehalt an Wasser von kleiner als 0,5%, bevorzugt von kleiner als 0,2%, ausgedrückt bezogen auf das Gewicht der Zusammensetzung.

11. Zusammensetzung gemäß Anspruch 10, **dadurch gekennzeichnet, dass** sie aufweist:
- einen mittleren Durchmesser ihrer Partikel zwischen 280 und 540 Mikrometern und
- eine Kompressibilität, gemessen gemäß einem Test A, von kleiner als 30 Newton.

12. Verwendung gemäß einem der Ansprüche 1 bis 9 oder einer Zusammensetzung gemäß einem der Ansprüuch 10 oder 11 zur:
- Synthese von Dextrose- oder Glucosederivaten, insbesondere von Alkyl(poly)glucosiden, Alkenyl(poly)-glucosiden, Mono- oder Diacetonglucosen, Zuckercouleur, Polyolen, Säuren, Vitaminen oder Tensiden auf chemischem, enzymatischem oder mikrobiologischem Weg,
- Herstellung von Fermentations-, Wachstums- oder Isolationsmedien für ein- oder mehrzellige Mikroorganismen, von Zell- oder Gewebekulturmedien,
- Herstellung von Zusammensetzungen, insbesondere nährenden, dehydrierenden, konditionierenden, konservierenden und/oder schützenden, die für die Behandlung von Pflanzen oder Pflanzenteilen bestimmt sind und/oder,
- Herstellung von färbenden Zusammensetzungen, Adjuvantien für mineralische Bindemittel, Additiven oder Zusammensetzungen für die, innere oder äußere, Behandlung von Materialien aus Kunststoff, Metall, Papier oder Textil, zur Herstellung von brennbaren oder nicht brennbaren Agglomeraten, von Gussformen und -kernen, Gipsplatten, Klebe- und Adhäsionsmitteln und von Detergenszusammensetzungen.

13. Verwendung gemäß Anspruch 12 zur Herstellung einer Zusammensetzung, die für die Behandlung von Schnittblumen bestimmt ist.
